**Europäisches Patentamt**

**European Patent Office**

**Office européen des brevets**

(19)

(11) Veröffentlichungsnummer: **0 337 160 B1**

# EUROPÄISCHE PATENTSCHRIFT

(12)

(45) Veröffentlichungstag der Patentschrift :
06.03.91 Patentblatt 91/10

(51) Int. Cl.⁵ : **B60S 1/04**

(21) Anmeldenummer : **89104906.6**

(22) Anmeldetag : **18.03.89**

(54) **Scheibenwischerträger.**

(30) Priorität : **05.04.88 DE 3811426**

(43) Veröffentlichungstag der Anmeldung :
**18.10.89 Patentblatt 89/42**

(45) Bekanntmachung des Hinweises auf die
Patenterteilung :
**06.03.91 Patentblatt 91/10**

(84) Benannte Vertragsstaaten :
**DE ES FR GB IT**

(56) Entgegenhaltungen :
**FR-A- 2 131 528**
**FR-A- 2 510 498**
**US-A- 3 264 670**

(73) Patentinhaber : **AUDI AG**
**Auto-Union-Strasse 1 Postfach 220**
**W-8070 Ingolstadt (DE)**

(72) Erfinder : **Mönch, Ernst**
**Reinekestrasse 25**
**W-8000 München 90 (DE)**

(74) Vertreter : **Engelhardt, Harald**
**AUDI AG Patentabteilung Postfach 220**
**W-8070 Ingolstadt (DE)**

**Beschreibung**

Die vorliegende Erfindung betrifft einen Scheibenwischerträger zur Halterung des Scheibenwischermotors einschließlich Getriebe und der beiden Scheibenwischerwellen, die über entsprechende Gestänge von einem Excenterzapfen der Ausgangswelle des Scheibenwischergetriebes antreibbar sind, wobei der Scheibenwischerträger unter Einsatz entsprechender Schraub-verbindungen im unteren Bereich des Scheibenflansches bzw. der Wasserkastenrückwand eines Personenkraftwagens befestigt ist (Siehe z. B. die US-A-3, 264, 670).

Der der Halterung der verschiedenen Aggregate einer Scheibenwischeranlage dienende Scheibenwischerträger ist in der Regel in Form eines flachen Metallteils ausgebildet, das unter Einsatz entsprechender Schraubenverbindungen am Scheibenflansch oder unterhalb desselben an der Wasserkastenrückwand befestigt ist.

Es ist die Aufgabe der vorliegenden Erfindung, den Scheibenwischerträger der eingangs genannten Art dahingehend weiterzubilden, daß mit geringem Materialeinsatz und wenig zusätzlichen Verschraubungen eine Versteifung der Karosserie, insbesondere im Hinblick auf ihre Torsionssteifigkeit, erreicht werden kann.

Erfindungsgemäß wird dies dadurch erreicht, daß der Scheibenwischerträger in Richtung der Wasserkastenvorderwand und/oder des Wasserkastenbodens tragende Versteifungsstreben aufweist, die an den betreffenden Wandelementen des Wasserkastens befestigt sind.

Die vorliegende Erfindung zeichnet sich dadurch aus, daß durch das Vorsehen an dem Scheibenwischerträger angeformter Versteifungsstreben eine zusätzliche Befestigungsmöglichkeit des Scheibenwischerträgers an der Wasserkastenvorderwand und/oder dem Wasserkastenboden geschaffen wird, wodurch die Torsionsfestigkeit der Karosserie zwangsläufig verbessert wird, ohne daß dabei zusätzliche Versteifungsstreben eingebaut werden müßten. Die zur Befestigung des Scheibenwischerträgers vorgesehenen Schraubverbindungen im Bereich des Scheibenwischerflansches bzw. der Wasserkastenrückwand werden dabei für die Versteifungsfunktion der Personenwagenkarosserie in diesem Bereich mit herangezogen, so daß nur eine geringe Anzahl zusätzlicher Verschraubungen im Bereich der Wasserkastenvorderwand bzw. des Wasserkastenbodens erforderlich sind. Im Vergleich zu einer Anordnung, bei der von der Scheibenwischeranlage unabhängige Versteifungen innerhalb des Wasserkastens vorgesehen sind, reduziert sich weiter im Rahmen der vorliegenden Erfindung der Montageaufwand bei vorzunehmenden Reparaturen, weil der vorgesehene Scheibenwischerträger mit seinen Versteifungsstreben in relativ einfacher Weise ausgebaut werden kann.

Um den Materialeinsatz im Bereich des Scheibenwischerträgers noch weiter reduzieren zu können, ist gemäß einer Weiterbildung der Erfindung vorgesehen, daß der Scheibenwischerträger drei den Wasserkasten durchsetzende Versteifungsstreben aufweist, deren gemeinsamer Verbindungspunkt an der Wasserkastenvorderwand befestigt ist, während die nach rückwärts ragenden freien Enden dieser Versteifungsstreben bei gleichzeitiger Befestigung an der Wasserkastenrückwand die drei Wellen der Scheibenwischeranlage tragen.

Um weiter auch auf der der Scheibenwischeranlage gegenüberliegenden Seite des Kraftfahrzeugs eine möglichst gute Versteifung im Bereich des Wasserkastens erreichen zu können, ist gemäß einer Weiterbildung der vorliegenden Erfindung vorgesehen, daß von dem nach rückwärts ragenden Ende der Versteifungsstrebe, das in etwa im mittleren Bereich des Wasserkastens befestigt ist, unter Bildung einer V-förmigen Konfiguration eine weitere Versteifungsstrebe ausgeht, deren freies Ende an der Wasserkastenvorderwand befestigt ist.

Um bei möglichst geringem Materialeinsatz eine gute Herstellbarkeit des erfindungsgemäßen Scheibenwischerträgers zu gewährleisten, ist schließlich noch im Rahmen einer Weiterbildung der vorliegenden Erfindung vorgesehen, daß der Scheibenwischerträger im wesentlichen aus vier den Wasserkasten schräg durchsetzenden Versteifungsstreben besteht, die einstückig im Spritzgußverfahren, vorzugsweise aus Aluminium, hergestellt sind.

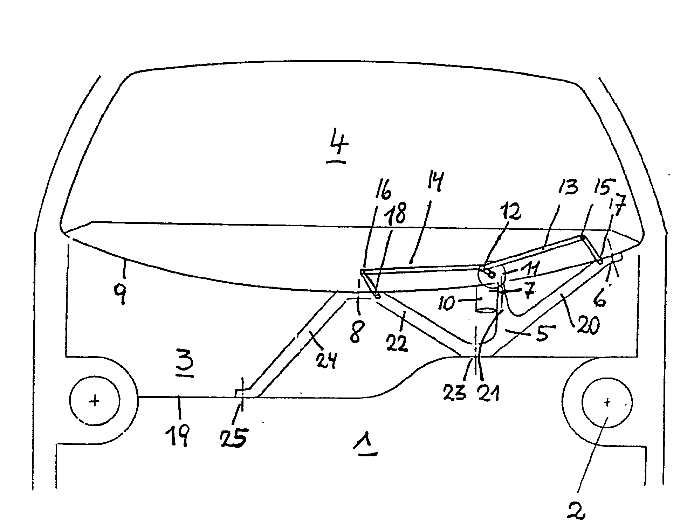

Die Erfindung soll nunmehr anhand eines Ausführungsbeispiels näher erläutert und beschrieben werden, wobei auf die beigefügte Zeichnung Bezug genommen ist, welche schematisch ein Kraftfahrzeug in Schrägaufsicht zeigt, in dessen Wasserkasten ein Scheibenwischerträger gemäß der Erfindung eingebaut ist.

Die einzige Figur zeigt in schräger Draufsicht einen Teil der Karosserie eines Personenkraftwagens. Die betreffende Figur zeigt dabei den rückwärtigen Teil des Motorraumes 1, innerhalb dem auf beiden Seiten Federbeinaufnahmen 2 für die Lagerung der beiden Vorderräder angeordnet sind. An den Motorraum 1 schließt sich ein Wasserkasten 3 an, in den beim Regen das von der Frontscheibe 4 ablaufende Wasser zum Hineinrinnen gebracht wird, das dann über nicht dargestellte Öffnungen und Schlauchverbindungen nach unten abgeleitet wird.

Innerhalb des Wasserkastens 3 ist ein Scheibenwischerträger 5 eingebaut, der unter Einsatz entsprechender Schraubenverbindungen 6 bis 8 unterhalb des Scheibenflansches an der Wasserkastenrückwand 9 befestigt ist. Der Scheibenwischerträger 5 trägt dabei die verschiedenen Elemente der Scheibenwischeranlage, die unter anderem den Scheibenwischermotor 10 umfassen, an dem unmittelbar ein Scheibenwischergetriebe 11 angeflanscht ist. Dieses Scheibenwischergetriebe 11 trägt auf der Ausgangsseite einen Excenterzapfen 12, der über Gestänge 13, 14 mit entsprechenden Excenterzapfen 15, 16 der beiden Scheibenwischerwellen 17, 18 verbunden ist. Die beiden Scheibenwischerwellen 17, 18, wiederum tragen zwei nicht dargestellte Scheibenwischerarme mit entsprechenden Scheibenwischerblättern, die auf der Frontscheibe 4 hin- und hergeschwenkt werden können.

Im Rahmen der vorliegenden Erfindung ist der Scheibenwischerträger 5 als Versteifungselement zwischen der Wasserkastenrückwand 9 und der Wasserkastenvorderwand 19 ausgebildet, zu welchem Zweck der Scheibenwischerträger 5 in Form von drei Versteifungsstreben 20 bis 22 ausgebildet ist, die strahlenförmig von einem gemeinsamen Befestigungspunkt im Bereich der Wasserkastenvorderwand 19 ausgehen, wobei dieser Befestigungspunkt unter Einsatz einer zusätzlichen Schraubenverbindung 23 an der Wasserkastenvorderwand 19 befestigt ist. Die freien Enden der drei Versteifungsstreben 20 bis 22 tragen dabei die beiden Scheibenwischerwellen 17 und 18 sowie die Ausgangswelle des Scheibenwischergetriebes 11 mit ihrem Excenterzapfen 12. Im Bereich der Enden dieser Versteifungsstreben 20 bis 22 sind weiter die Schraubenverbindungen 6 bis 8 vorgesehen, mit welchen eine Befestigung des Scheibenwischerträgers 5 an der Wasserkastenrückwand 9 erfolgt. Als zusätzliche Maßnahme ist weiter vorgesehen, daß von dem freien Ende der Versteifungsstrebe 22, die in den mittleren Bereich der Wasserkastenrückwand 9 ragt und dabei die Scheibenwischerwelle 18 trägt, unter Ausbildung einer V-förmigen Konfiguration eine weitere Versteifungsstrebe 24 ausgeht, deren freies Ende unter Einsatz einer weiteren Schraubenverbindung 25 an der Wasserkastenvorderwand 19 befestigt ist.

Bei dem im wesentlichen aus den vier Versteifungsstreben 20, 21, 22 und 24 gebildeten Scheibenwischerträger 5 handelt es sich um ein einstückiges Bauteil, das vorzugsweise im Spritzgußverfahren aus Aluminium hergestellt ist.

## Ansprüche

1. Scheibenwischenträger (5) zur Halterung des Scheibenwischermotors (10) einschließlich Getriebe (11) und der beiden Scheibenwischerwellen (17, 18), die über entsprechende Gestänge (13, 14) von einem Excenterzapfen der Ausgangswelle des Scheibenwischergetriebes antreibbar sind, wobei der Scheibenwischerträger (5) unter Einsatz entsprechender Schraubverbindungen (6, 7, 8) im unteren Bereich des Scheibenflansches bzw. der Wasserkastenrückwand (9) eines Personenkraftwagens befestigt ist, dadurch gekennzeichnet, daß derselbe in Richtung der Wasserkastenvorderwand (19) und/oder des Wasserkastenbodens tragende Versteifungsstreben (20 bis 22) aufweist, die an den betreffenden Wandelementen (19) des Wasserkastens (3) befestigt sind.

2. Scheibenwischerträger nach Anspruch 1, dadurch gekennzeichnet, daß derselbe drei den Wasserkasten (3) durchsetzende Versteifungsstreben (20 bis 22) aufweist, deren gemeinsamer Verbindungspunkt an der Wasserkastenvorderwand (19) befestigt ist, während die nach rückwärts ragenden freien Enden dieser Versteifungsstreben (20 bis 22) bei gleichzeitiger Befestigung an der Wasserkastenrückwand (9) die drei Wellen (17, 18) der Scheibenwischeranlage tragen.

3. Scheibenwischerträger nach Anspruch 2, dadurch gekennzeichnet, daß von dem nach rückwärts ragenden Ende der Versteifungsstrebe (22), das in etwa im mittleren Bereich des Wasserkastens (3) an der Wasserkastenrückwand (9) befestigt ist, unter Bildung einer V-förmigen Konfiguration eine weitere Versteifungsstrebe (24) ausgeht, deren freies Ende an der Wasserkastenvorderwand (19) befestigt ist.

4. Scheibenwischerträger nach Anspruch 3, dadurch gekennzeichnet, daß derselbe im wesentlichen aus vier den Wasserkasten schräg durchsetzenden Versteifungsstreben (20 bis 22, 24) besteht, die einstückig im Spritzgußverfahren, vorzugsweise aus Aluminium, hergestellt sind.

## Claims

1. Windscreen-wiper support (5) for mounting the windscreen-wiper motor (10) including gearing (11) and two windscreen-wiper shafts (17, 18) which can be driven via corresponding linkages (13, 14) by an eccentric pin (12) of the output shaft of the windscreen-wiper gearing, the windscreen-wiper support (5) being fixed in the lower area of the windscreen flange or the water-box rear wall (9) of a passenger car with the use of appropriate screwed connections (6, 7, 8), characterized in that the same has reinforcing struts (20 to 22) supporting in the direction of the water-box front wall (19) and/or the water-box base, which reinforcing struts (20 to 22) are fixed to the relevant wall elements (19) of the water-box (3).

2. Windscreen-wiper support according to Claim 1, characterized in that the same has three reinforcing struts (20 to 22) passing through the water-box (3), the common connecting point of which reinforcing struts (20 to 22) is fixed to the water-box front wall (19), whereas the free ends, projecting to the rear, of these reinforcing struts (20 to 22) support the three shafts (17, 18) of the windscreen-wiper unit while being simultaneously fixed to the water-box rear wall (9).

3. Windscreen-wiper support according to Claim 2, characterized in that a further reinforcing strut (24), while forming a V-shaped configuration, starts from the end of the reinforcing strut (22), which end protrudes to the rear and is fixed to the water-box rear wall (9) approximately in the centre area of the water-box, the free end of which further reinforcing strut (24) is fixed to the water-box front wall (19).

4. Windscreen-wiper support according to Claim 3, characterized in that the same essentially consists of four reinforcing struts (20 to 22, 24) which pass through the water-box at an angle and are made in one piece, preferably of aluminium, by the die-casting process.

**Revendications**

1. Support d'essuie-glace (5) pour la fixation du moteur d'essuie-glace (10), y compris son mécanisme de transmission (11) et les deux arbres d'essuie-glace (17, 18) qui peuvent être entraînés, par l'intermédiaire de tringleries appropriées (13, 14), par le maneton (12) d'une manivelle de l'arbre de sortie du mécanisme de transmission de l'essuie-glace, ce support d'essuie-glace (5) étant fixé, au moyen d'assemblages à vis appropriés (6, 7, 8), dans la partie intérieure du cadre de la glace ou à la paroi arrière (9) de la boîte à eau d'une voiture particulière, caractérisé en ce qu'il présente des entretoises de renfort (20 à 22) qui sont portantes en direction de la paroi avant (19) de la boîte à eau et/ou du fond de la boîte à eau et qui sont fixées aux éléments de paroi en question (19) de la boîte à eau (3).

2. Support d'essuie-glace selon la revendication 1, caractérisé en ce qu'il présente trois entretoises de renfort (20 à 22) qui traversent la boîte à eau (3) et dont le point de jonction commun est fixé à la paroi avant (19) de la boîte à eau, tandis que les extrémités libres de ces entretoises de renfort (20 à 22), qui font saillie vers l'arrière, portent les trois arbres (17, 18) de l'installation d'essuie-glace, en étant en même temps fixées à la paroi arrière (9) de la boîte à eau.

3. Support d'essuie-glace selon la revendication 2, caractérisé en ce qu'une autre entretoise de renfort (24), dont l'extrémité libre est fixée à la paroi avant (19) de la boîte à eau, part de l'extrémité en saillie vers l'arrière de l'entretoise de renfort (22) qui est fixée à la paroi arrière (9) de la boîte à eau (3) à peu près dans la région médiane de celle-ci, avec formation d'une configuration en forme de V.

4. Support d'essuie-glace selon la revendication 3, caractérisé en ce qu'il se compose essentiellement de quatre entretoises de renfort (20 à 22, 24) qui traversent obliquement la boîte à eau et qui sont fabriquées d'une seule pièce, de préférence en aluminium, par le procédé de moulage par injection.